# EUROPÄISCHE PATENTANMELDUNG

(11) **EP 1 056 097 A2**
(43) Veröffentlichungstag der Anmeldung: **29.11.2000**
(21) Anmeldenummer: 00110271.4
(22) Anmeldetag: 22.05.2000
(51) Int. Cl.: H01B 1/12, G02F 1/15

(54) **Optisch transparenter polymerer Festelektrolyt**

(30) Priorität: 26.05.1999 DE 19923906
(71) Anmelder: BASF AKTIENGESELLSCHAFT, 67056 Ludwigshafen (DE)
(72) Erfinder: Bauer, Stephan, Dr., 49179 Ostercappeln (DE); Bronstert, Bernd, Dr., 67166 Otterstadt (DE); Möhwald, Helmut, Dr., 76855 Annweiler (DE); Neuss, Michael, 67316 Carlsberg (DE); Burkhardt, Uwe, 67063 Ludwigshafen (DE)

(57) **Zusammenfassung**

Optisch transparente polymeren Festelektrolyte aus einem polymeren Bindemittel, einem Füllstoff, einem Leitsalz, einem Ionen solvatisierenden Weichmacher sowie optional weiteren Zusatzstoffen und Hilfsmitteln, ein Verfahren zur Herstellung derartiger Festelektrolyte durch Compoundieren und thermoplastische Formgebung sowie deren Verwendung in elektrochromen Systemen und Displays.

## Beschreibung

Die Erfindung betrifft einen optisch transparenten polymeren Festelektrolyten aus einem polymeren Bindemittel, einem Füllstoff, einem Leitsalz, einem Ionen solvatisierenden Weichmacher sowie optional weiteren Zusatzstoffen und Hilfsmitteln, ein Verfahren zur Herstellung derartiger Festelektrolyte sowie deren Verwendung in elektrochromen Systemen und Displays.

Optisch transparente polymere Festelektrolyte sind prinzipiell bekannt. Sie finden insbesondere Anwendung in elektrochromen Systemen, beispielsweise in elektrochromen Verglasungen. In elektrochromen Verglasungen kann die Lichtdurchlässigkeit durch Anlegen elektrischer Potentiale reversibel und stufenlos geregelt werden. Der Aufbau derartiger Systeme ist bspw. in EP-A 461 685, DE-A 36 43 690 oder US 5,244,557 offenbart. Typischerweise weist eine elektrochrome Verglasung folgende Schichtreihenfolge auf: Glasscheibe - transparente elektrisch leitende Schicht - elektrochrome Elektrode - Elektrolyt - Gegenelektrode - transparente elektrisch leitende Schicht - Glasscheibe.

Festelektrolyte übernehmen in diesen Systemen die Aufgabe, je nach der Polarität des angelegten elektrischen Feldes, Kationen zur elektrochromen Elektrode hin oder von der Elektrode weg zu transportieren. Die elektrochrome Elektrode ändert durch diesen Prozess ihre Farbe. Für die Anwendung in elektrochromen Systemen geeignete Festelektrolyte müssen eine Vielzahl unterschiedlicher Anforderungen erfüllen. Sie müssen eine hohe elektrische Leitfähigkeit und hohe optische Transparenz im sichtbaren Spektralbereich besitzen, und sie müssen außerdem in einem weiten Temperaturbereich ohne Einbußen ihrer optischen, elektrischen und mechanischen Eigenschaften einsetzbar sein. Weitere Anforderungen sind beispielsweise gute Klebeeigenschaften, damit ein stabiler Verbund mit den anderen Schichten der Verglasung erreicht wird, sowie gute plastische Verformbarkeit, um auch die Herstellung gewölbter Scheiben, z.B. für die Anwendung im Automobil zu ermöglichen.

US 5,244,557 offenbart eine elektrochrome Verglasung mit einem Elektrolyten aus Polyethylenoxid und P₂O₅. EP-A 392 839, EP-A 461 685 und EP-A 499 115 offenbaren Festelektrolyten mit polaren Polymeren auf Basis von Polyethylenoxid, Polyethylenoxid-Copolymeren oder -Propfcopolymeren und in diesen polaren Polymeren löslichen Leitsalzen, insbesondere Li-Salzen. Die Festelektrolyte werden hergestellt, indem die Ausgangsmaterialien in geeigneten organischen Lösungsmitteln gelöst, die Substrate damit beschichtet und das Lösungsmittel wieder verdampft wird. Es sind jedoch lange Trocknungszeiten erforderlich, um die Lösungsmittel vollständig zu entfernen. So offenbart US 5,244,557 Trocknungszeiten von 20 h und EP-A 392 839 solche von 8h. Die Verfahren sind daher umständlich und teuer.

WO 98/44576 offenbart ein Verfahren zur Herstellung von elektrochemisch aktive und/oder elektrochemisch inerte Festsstoffe enthaltenden Separator-, Elektroden- und Festelektrolyt-Folien für die Anwendung in Lithiumionenbatterien. Die Schrift schlägt auch die Verwendung derartiger Folien in elektrochromen Systemen vor. Die Verwendung der Batteriefolien im Bereich elektrochromer Verglasungen ist jedoch mit einer Reihe von Nachteilen behaftet. Die offenbarten Festelektrolyten weisen keine oder eine nicht ausreichende Transparenz für die Anwendung in elektrochromen Verglasungen auf. Plastische Verformbarkeit und gute Klebrigkeit sind bei Lithiumionenbatterien unerwünschte Eigenschaften, die ein Festelektrolyt für elektrochrome Verglasungen jedoch aufweisen sollte. Weiterhin sind Festelektrolyte für den Batteriebereich auf aprotische Systeme beschränkt.

Aufgabe der vorliegenden Erfindung war es, einen polymeren Festelektrolyten bereitzustellen, der bei guter Transparenz, guter Leitfähigkeit und guten mechanischen Eigenschaften auf einfache Art und Weise zu elektrochromen Verglasungen verarbeitet werden kann.

Dementsprechend wurden optisch transparente polymere Festelektrolyte mit einer Lichtdurchlässigkeit > 80%, aus einem polymeren Bindemittel, einem Füllstoff, einem Leitsalz, einem Ionen solvatisierenden Weichmacher sowie optional weiteren Zusatzstoffen und Hilfsmitteln, ein Verfahren zur Herstellung derartiger Festelektrolyte sowie deren Verwendung in elektrochromen Systemen und Displays gefunden.

Als polymere Bindemittel kommen prinzipiell alle thermoplastisch verarbeitbaren Polymere mit ausreichender Transparenz in Frage. Insbesondere geeignet sind solche Thermoplasten, die im UV/VIS-Bereich eine Lichtdurchlässigkeit von mehr als 80 % aufweisen. Beispiele für geeignete Polymere sind Polyacrylate, insbesondere solche aus Acrylsäure- oder Methacrylsäureestern der allgemeinen Formel H₂C=CHR₁-COOR₂, wobei R₁ für Methyl oder Wasserstoff steht und R₂ für geradkettige, verzweigte oder cyclische Kohlenwasserstoffreste, wie beispielsweise Methyl-, Ethyl-, n-Propyl, iso-Propyl-, n-Butyl--, iso-Butyl-, sec-Butyl, tert.-Butyl-, n-Amyl-, iso-Amyl-, sec.-Amyl-, tert.-Amyl-, Neopentyl-, n-Hexyl-, n-Heptyl-, n-Octyl-, 2-Ethylhexyl-, n-Nonyl-, iso-Nonyl-, n-Decyl-, n-Undecyl-, n-Dodecyl-, Cyclohexyl-, 3,3,5-Trimethylcyclohexyl-, Isobornyl-, Vinyl- oder Allyl-Gruppen. In einer besonderen Ausführungsform können die R₂-Reste auch einen oder mehrere Substituenten tragen, insbesondere Chlor oder Fluor. Beispiele dafür sind 2,2,2-Trifluroethyl-, 2,2,3,3-Tetrafluoropropyl oder 1,1,1,3,3,3,-Hexafluoroisopropyl-Gruppen. Es können auch Gemische zweier oder mehrerer Acrylate eingesetzt werden.

Es können auch Copolymere von Acrylaten mit einem oder mehreren Comonomeren eingesetzt werden. Als Comonomere kommen insbesondere in Frage:
- Acrylsäure- und Methacrylsäureamide. Als Substituenten am Amidstickstoff von Acryl- oder Methacrylamid kommen neben Wasserstoff die oben unter R₂ genannten Gruppen in Betracht. Es können auch geeignete Imide, bspw. Maleinsäureimid eingesetzt werden.
- Acryl- oder Methacrylnitril.
- Styrolderivate der allgemeinen Formel 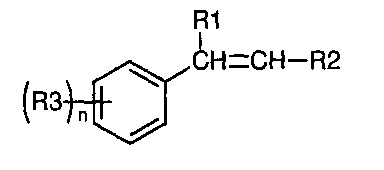 Der Rest R1 steht vorzugsweise für Wasserstoff oder Methyl, die Reste R2 und R3 bezeichnen vorzugsweise Wasserstoff oder Kohlenwasserstoffreste. Bevorzugt als Comonomer ist Styrol.
- Geradkettige, verzweigte und/oder cyclische C₂- bis C₂₀-Olefine, wie Ethylen, Propylen, 1-Butylen, 2-Butylen, Butadien, Isopren, 1-Penten, 2-Penten, 3-Penten, 1-Hexen, 2-Hexen, 3-Hexen, 2,4-Hexadien, Heptene, Octene, Nonene, Decene, Cyclohexen und Norbonen.
   Bevorzugt als Comonomer sind Ethylen, Propylen und 1-Butylen.

Besonders bevorzugt kommen als thermoplastisch verarbeitbare Bindemittel solche Polymere in Frage, die üblicherweise zur Herstellung optischer Bauelemente aus Kunststoffen eingesetzt werden.

Derartige Polymere und ihre Eigenschaften sind beispielsweise in "Optical Plastics" (Ullmann's Encyclopedia of Industrial Chemistry, 6^{th} Edition, 1998, Electronic Release) dargestellt. Beispiele derartiger Polymere sind Polymethylmethacrylat, Polycyclohexylmethacrylat, Copolymere aus Cyclohexylmethacrylat und Methylmethacrylat, Copolymere aus Cyclohexylmethacrylat und/oder Methylmethacrylat und Styrol, Polystyrol, Styrol-Acrylnitril-Copolymerisate, Copolymerisate aus Styrol und Maleinsäureanhydrid, Polycarbonate wie bspw. solche aus Bisphenol A und Phosgen, Polyvinylbutyral, teil- oder vollhydrolysiertes Polyvinylacetat/Polyvinylalkohol bzw. deren Copolymere wie bspw. Ethylen/Polyvinylacetat-Copolymere, Diphenylsulfidcarbonat, Polytrifluormethylstyrol, Polymethylpenten oder Celluloseester wie bspw. Celluloseacetat, Cellulosepropionat oder Celluloseacetobutyrat. Einsetzbar sind auch geeignete thermoplastische Polyurethane, Polyolefine oder Polyester wie Polyethylenterephthalat oder Polybutylenterephthalat.

Es können auch Gemische von zwei oder mehreren verschiedenen polymeren Bindemitteln eingesetzt werden, vorausgesetzt, die Polymere sind miteinander verträglich. Das Molekulargewicht der Polymeren kann je nach den gewünschten Eigenschaften des Festelektrolyten gewählt werden. Bevorzugt sollte die Glasübergangstemperatur des eingesetzten Polymeren kleiner als -30°C sein. Üblicherweise ist das polymere Bindemittel in einer Menge von 5 bis 97 Gew.% bzgl. aller Bestandteile des Festelektrolyten enthalten. Bevorzugt enthält der Festelektrolyt 10 bis 80 Gew.% des Füllstoffes, besonders bevorzugt 10 bis 50 Gew.%.

Der erfindungsgemäße Festelektrolyt enthält weiterhin einen Füllstoff mit einer Primärpartikelgröße von 1 nm bis 20 µm. Bei runden oder annähernd runden Partikeln bezieht sich diese Angabe auf den Durchmesser, bei unregelmäßig geformten, wie bspw. bei nadelförmigen Partikeln auf die längste Achse. Die Füllstoffe sollten eine Lichtdurchlässigkeit, jeweils gemessen am reinen Material, von mehr als 80% aufweisen.

Die möglichen Füllstoffe können prinzipiell aus zwei verschiedenen Klassen gewählt werden: In Frage kommen zum einen Füllstoffe mit einer Primärpartikelgröße, die gleich oder größer ist als die Wellenlänge des sichtbaren Lichtes. Derartige Partikel müssen den gleichen Brechungsindex aufweisen wie das polymere Bindemittel, damit es nicht zu Streuung kommt. Ihre Primärpartikelgröße sollte aber 20 µm, bevorzugt 10 µm nicht überschreiten, weil sonst keine homogenen Festelektrolyten mehr erhalten werden.

Zum anderen kommen Füllstoffe in Frage, deren Primärpartikelgröße 1 bis 300 nm beträgt, deren Größe also geringer ist als die Wellenlänge des sichtbaren Lichtes. Der Brechungsindex derartiger Füllstoffe kann sich von dem der Polymermatrix unterscheiden. Die Füllstoffe sind im allgemeinen farblos, die Erfindung umfasst aber auch, für Spezialanwendungen farbige Füllstoffe einzusetzen.

Geeignete Füllstoffe sind beispielsweise Polymerpartikel, die auch vernetzt sein können, wie solche aus Polystyrol, Polycarbonat oder Polymethylmethycrylat (z.B. Agfaperl®). Weiterhin geeignet sind insbesondere anorganische Füllstoffe mit einer Primärpartikelgröße von 1 bis 300 nm. Beispiele für geeignete anorganische Füllstoffe sind Glasmehl, Nanoglaspartikel, wie bspw. Monospher® (Fa. Merck), Mikroglaspartikel, wie bspw. Spheriglas® (FA. Potters-Ballotini). Weiterhin geeignet sind anorganische Oxide und Mischoxide insbesondere der Elemente Silicium, Aluminium, Magnesium, Titan oder Calcium. Beispiele derartiger Füllstoffe sind Siliciumdioxid, insbesondere pyrogene Oxide wie bspw. Aerosil® (Fa. Degussa), Silikate, wie bspw. Talk, Pyrophyllit, Wollastonit, Alumosilikate wie bspw. Feldspäte oder Zeolithe. Die Füllstoffe können auch mit geeigneten Dispergierhilfsmitteln, Haftvermittlern oder Hydrophobierungsmitteln belegt sein. Es können auch Gemische zweier oder mehrerer Füllstoffe eingesetzt werden. Besonders bevorzugt sind hydrophobierte pyrogene Kieselgelsäuren, wie bspw. Aerosil® R812, Aerosil® VP R8200, Aerosil® R974.

Üblicherweise ist der Füllstoff in einer Menge von 1 bis 80 Gew.% bzgl. aller Bestandteile des Festelektrolyten enthalten. Bevorzugt enthält der Festelektrolyt 8 bis 78 Gew.% des Füllstoffes, besonders bevorzugt 20 bis 67 Gew.%.

Der erfindungsgemäße Festelektrolyt enthält mindestens ein Leitsalz. Als Kationen kommen in der Regel die Elemente Li, Na, K, Cs, Mg oder Ag in Frage. Bevorzugtes Kation ist Li. Beispiele für geeignete Leitsalze sind LiCl, LiPF₆, LiBF₄, LiAsF₆, LiCF₃SO₃, LiC(CF₃SO₂)₃, LiN(CF₃SO₂)₂, Li(CₙF₂ₙ₊₁)SO₃, LiC[(CₙF₂ₙ₊₁)SO₂]₃, LiN[CₙF₂ₙ₊₁)SO₂]₂, mit n jeweils 2 bis 20, LiClO4, LiN(SO₂F)₂, LiSbF₆, LiAlCl₄, LiSiF₆, NaPF6, NaBF₄, NaCF₃SO₃, NaClO₄, KPF₆, KBF₄, KCF₃SO₃ oder AgCF₃SO₃. Es können auch organische Salze wie bspw. Natriumoctylsulfat, Lithiumdodecylbenzolsulfat o.ä. eingesetzt werden. Bevorzugt wird als Leitsalz LiClO₄ oder LiCF₃SO₃ eingesetzt. Es können auch Gemische zweier oder mehrerer Leitsalze eingesetzt werden.

Üblicherweise ist das Leitsalz in einer Menge von 1 bis 40 Gew.% bzgl. aller Bestandteile des Festelektrolyten enthalten. Bevorzugt enthält der Festelektrolyt 2 bis 10 Gew.% des Füllstoffes, besonders bevorzugt 3 bis 8 Gew.%.

Als Weichmacher kommen übliche, hochsiedende Weichmacher oder Lösungsmittel in Frage. Vorteilhaft werden solche Weichmacher eingesetzt, die Ionen, insbesondere Li-Ionen solvatisieren können. Die Weichmacher fungieren einerseits als Lösemittel für die Leitsalze und beeinflussen weiterhin die mechanischen Eigenschaften des Festelektrolyten, bspw. durch Erniedrigung von dessen Glasübergangstemperatur. Geeignete mit dem jeweils eingesetzten Bindemittel und Füllstoff verträgliche Weichmacher werden vom Fachmann ausgewählt. Dabei ist zu beachten, dass der Weichmacher die Transparenz des Festelektrolyten nicht wesentlich beeinträchtigen darf. Es können sowohl protische wie aprotische Weichmacher eingesetzt werden. Beispiele für protische Weichmacher sind Glykol sowie über endständige OH-Gruppen verfügende oligomere Polyethylenglykole oder Polypropylenglykole. Derartige Weichmacher sind beispielsweise unter dem Handelsnamen Pluriol® erhältlich. Es können auch primäre Alkohole wie bspw. 2-Ethylhexanol eingesetzt werden.

Beispiele für aprotische Weichmacher sind lineare oder cyclische organische Carbonate der allgemeinen Formel R₁O(CO)OR₂, wobei R₁ und R₂ jeweils für gradkettige oder verzweigte Alkylreste oder Arylreste stehen, die auch noch inerte Substituenten, wie z.B. Chlor oder Brom tragen können. Gut geeignet sind insbesondere solche Carbonate mit 1 bis 6 Kohlenstoff atomen. R₁ und R₂ können auch zu einem z.B. 5- oder 6-gliedrigem Ring miteinander verbunden sein. Es können auch C-Atome durch O-substituiert sein. Beipiele für derartige Carbonate sind Ethylencarbonat, Propylencarbonat, Butylencarbonat, Diethylcarbonat, Dipropylcarbonat, Diisopropylcarbonat, Dibutylcarbonat, Di(2-methoxyethyl)carbonat oder Di(2-butoxyethyl)carbonat. Geeignet sind auch organische Phosphate R₁R₂R₃PO₄ wobei R₁,R₂ und R₃ jeweils für gradkettige oder verzweigte Alkylreste mit 1 bis 8 Kohlenstoffatomen oder für Arylreste stehen, die auch noch weiter substituiert sein können. Insbesondere können auch C-Atome durch O-substituiert sein. R₁, R₂ und R₃ können auch paarweise zu einem Ring miteinander verbunden sein. Beispiele geeigneter Phosphate sind Trimethylphosphat, Triethylphosphat, Tripropylphosphat, Tributylphosphat, Triisobutylphosphat, Tripentylphosphat, Trihexylphosphat, Tnoctylphosphat, Tris(2-ethyl-hexyl)phosphat, Tridecylphosphat, Diethyl-n-butylphosphat, Tris(butoxyethyl)phosphat Tris(2-methoxyethyl)phosphat, Tris(tetrahydrofuryl)phosphat, Tris(1H,1H,5H-octafluorpentyl)phosphat, Tris(1H,1H-trifluorethyl)phosphat, Tris(2-(diethylamino)ethyl)phosphat, Tris-(methoxyethoxyethyl)phosphat, Tris(ethoxycarbonyloxyethyl)phosphat oder Trikresylphosphat.

Als Weichmacher geeignet sind auch Ester organischer Säuren, beispielsweise Ester der Adipinsäure oder Phthalsäure wie 2-Ethylhexyladipat oder 2-Ethylhexylphthalat. Vorteilhaft können cyclische Ester wie ω±Butyrolacton, Dimethyl-ω-butyrolacton, Diethyl-ω-butyrolacton, ω-Valerolacton, 4,5-Dimethyl-1,3-dioxolan-2-on, 4,4-Dimethyl-1,3-dioxolan-2-on, 4-Ethyl-1,3-dioxolan-2-on, 4-Methyl-5-ethyl-1,3-dioxolan-2-on, 4,5-Diethyl-1,3-dioxolan-2-on, 4,4-Diethyl-1,3-dioxolan-2-on, 1,3-Dioxan-2-on, 4-Methyl-1,3-dioxan-2-on, 5-Methyl-1,3-dioxan-2-on, 4,4-Dimethyl-1,3-dioxan-2-on, 5,5-Dimethyl-1,3-dioxan-2-on, 4,6-Dimethyl-1,3-dioxan-2-on oder 4,4,6-Trimethyl-1,3-dioxan-2-on, 5,5-Diethyl-1,3-dioxan-2-on verwendet werden. Vorteilhaft sind auch Ester anorganischer Säuren einsetzbar, die über -(CH₂-CH₂O)ₙCH₃-Gruppen verfügen, insbesondere Ester der Borsäure, Kohlensäure, Schwefelsäure und Phosphorsäure. Ester der genannten Art sind von WO 98/44576, Seite 27 bis 31 offenbart. Es können auch Ether eingesetzt werden, wie bspw. Dibutylether, Dihexylether, Diheptylether, Dioctylether, Dinonylether, Didecylether, Didodecylether, Ethylenglykoldimethylether, Ethylenglykoldiethylether, 1,2-Dimethoxypropan, Diethylenglykoldibutylether, Triethylenglykoldimethylether, Tetraethylenglykoldimethylether oder Polyglykolalkylether, Tetrahydropyran, 1,4-Dioxan, 1,3-Dioxan, 2,5-Diethoxytetrahydrofuran oder 2,5-Dimethoxytetrahydrofuran. weiterhin geeignet sind auch Dimethylformid N-Methylpyrrolidon oder Acetonitril. Es können auch Mischungen verschiedener Weichmacher im Festelektrolyten vorhanden sein.

Üblicherweise ist der Weichmacher in einer Menge von 1 bis 90 Gew.% bzgl. aller Bestandteile des Festelektrolyten enthalten. Bevorzugt enthält der Festelektrolyt 10 bis 50 Gew.% des Weichmachers, besonders bevorzugt 20 bis 40 Gew.%.

Der erfindungsgemäße Festelektrolyt kann darüber hinaus optional Zusatzstoffe und Hilfsmittel enthalten. Beispielsweise können Antioxidantien wie bspw. Irganox®, Ultranox® oder Sicostab® UV-Stabilisatoren, wie bspw. Uvinul® oder Irgastab® vorhanden sein. Weiterhin können Dispergierhilfsmittel wie bspw. Lutensol ® oder Sokalan® für den Füllstoff oder Haftvermittler eingesetzt werden.

Die Menge an Zusatzstoffen und Hilfsmitteln kann vom Fachmann je nach Bedarf gewählt werden. Die Menge sollte aber 30 Gew.%, bevorzugt 10 Gew. % nicht überschreiten.

In einer bevorzugten Ausführungsform der Erfindung liegt der Festelektrolyt als Folie vor. Die Dicke der Folie wird je nach dem gewünschten Anwendungszweck gewählt. Beispielsweise können die Folien Dicken zwischen 5 µm und 5 mm aufweisen. Bevorzugt weisen die Folien eine Dicke von 10 µm und 2 mm auf.

Der erfindungsgemäße Festelektrolyt kann unvernetzt sein, er kann aber auch vernetzt vorliegen. Im letzteren Falle enthält er noch die Reaktionsprodukte von zur Vernetzung zugegebenen Verbindungen, also bspw. die aus der Photopolymerisation von ethylenisch ungesättigten Verbindungen mit geeigneten Photoinitiatoren resultierenden Polymere.

Alle Bestandteile des erfindungsgemäßen Festelektrolytens bilden eine homogene, in der Regel farblose und glasklare Masse. Der Füllstoff ist gleichmäßig im Bindemittel dispergiert und das Leitsalz vollständig gelöst. Die Lichtdurchlässigkeit ist bevorzugt größer als 80%, besonders bevorzugt größer als 85 %. Der erfindungsgemäße Festelektrolyt kann aber auch milchig, also höhere Streuanteile aufweisend oder gefärbt sein, wenn dies für eine bestimmte Anwendung erforderlich ist.

Der erfindungsgemäße Festelektrolyt kann hergestellt werden, indem man die obengenannten Bestandteile in einem geeigneten, intensiv wirkenden Mischaggregat bei erhöhten Temperaturen plastifiziert und intensiv miteinander vermischt bis der Füllstoff homogen in der Bindemittelmatrix dispergiert ist und eine klare, blasenfreie Masse erhalten wird. Die Verfahrenstemperatur richtet sich nach den gewählten Polymeren und Weichmachern und liegt im Regelfalle zwischen 50 und 200°C. Als intensiv wirkende Mischaggregate kommen insbesondere Kneter, Ein- oder Mehrwellenextruder oder Intensivmischer in Frage.

Das Kneten kann in Knetaggregaten mit verschiedenen Bauweisen durchgeführt werden, z.B. mit chargenweise arbeitenden, offenen Trogknetern oder den mit ihnen baulich verwandten Innenmischern, die in Abhängigkeit von den Eigenschaften des Mischgutes mit einer oder zwei (gleich- oder gegenläufigen) Knetwellen bestückt sein können. In kontinuierlichen Knetern (z.B. Ein-, Zwei- od. Mehrwellenmischer) bewirken die Knetorgane zugleich den Guttransport. Das Knetgut kann innerhalb der Förderstrecke komprimiert, entgast, plastifiziert und homogenisiert werden.

Als Vorrichtungen zur Extrusion können beispielsweise Ein- und Zwei-Schneckenmaschinen wie z. B. einwellige Mischextruder (Reifenhäuser, Krauss Maffei, Berstorf) gleichlaufende oder gegenlaufende, dichtkämmende Zweischneckenkneter (Werner und Pfleiderer, Berstorff, APV), Mehrschneckenextruder, Buss Ko-Kneter oder gegenlaufende, nicht kämmender Kneter (Farrel, JSW) eingesetzt werden.

Im Anschluß an den Homogenisierungsprozeß können durch geeignete Techniken Formkörper, insbesondere Folien ausgeformt werden. Als Beispiel für geeignete thermoplastische Formgebungsverfahren seien Schmelzextrudieren, Spritzgießen oder Pressen genannt. Einsetzbar sind hierbei prinzipiell alle Aggregate, die üblicherweise zur Verarbeitung und Ausformung von thermoplastischen Kunststoffen eingesetzt werden. Bevorzugt wird der erfindungsgemäße Festelektrolyt unter Verwendung einer Schmelzepumpe, einer Breitschlitzdüse und einer geeigenetem Abzugvorrichtung und/oder eines Glättwerkzeuges, insbesondere eines Chill-roll-Glättwerkes zu einer Folie ausgeformt.

Die Folie kann anschließend durch weitere Verfahrensschritte, wie z.B. durch Walzen, Kalandrieren oder Chill-roll-Verfahren nachbehandelt werden. Den Folien kann außerdem bei dieser Nachbehandlung eine Oberflächentextur aufgeprägt werden. Eine solche Oberflächentextur ist für verschiedene Anwendungen hilfreich, z.B. zum besseren Kontaktieren und Auflaminieren, z.B. unter Einwirkung Wärme und Vakuum auf glatte Oberflächen.

Wenngleich die Schmelzextrusion die bevorzugte Herstellmethode für den erfindungsgemäßen Festelektrolyten ist, so umfasst die Erfindung auch andere Vorgehensweisen, wie bspw. alle Bestandteile bis auf den Füllstoff in einem geeigneten Lösemittel zu lösen, den Füllstoff darin zu gleichmäßig dispergieren, eine Schicht auf ein geeignetes Substrat zu gießen und das Lösemittel wieder zu verdampfen.

Eine weitere, wenngleich nicht bevorzugte Verfahrensvariante ist es, den Festelektrolyten zunächst ohne Leitsalze herzustellen, und die Leitsalze erst zu einem späteren Zeitpunkt durch Tränken des Festelektrolyten mit einer Lösung des Leitsalzes in einem geeigneten Lösungsmittel einzubringen.

Der erfindungsgemäße Festelektrolyt kann auch vernetzt werden. Die Vernetzung kann thermisch erfolgen, indem den Ausgangsmaterialien thermische Vernetzter zugegeben werden, die bei der Verfahrenstemperatur der Schmelzextrusion noch nicht vernetzen. Nach der Ausformung wird die Vernetzung durch Erwärmen des Formkörpers oder der Folie auf höhere Temperaturen ausgelöst. Bevorzugt wird aber eine Strahlungsvernetzung durchgeführt. Dazu nötige Vernetzer oder Hilfsmittel, wie bspw. Phtoinitiatoren werden den Ausgangsmaterialien zugegeben und mit diesen compoundiert und schmelzextrudiert. Die Strahlungsvernetzung kann beispielsweise durch Bestrahlung mit energiereicher Strahlung, wie ionischer Strahlung, ionisierender Strahlung, Elektronenstrahlen, Röntgen- oder γ-Strahlen, gegebenenfalls unter Einsatz zusätzlicher Initiatoren erfolgen. Vorteilhaft wird die Vernetzung mit aktinischem Licht, insbesondere mit UV-Licht durchgeführt. Hierzu werden in bekannter Weise polymerisierbare Verbindungen, beziehungsweise Monomere eingesetzt. Die Monomeren weisen mindestens eine polymerisierbare ethylenische Doppelbindung auf. Die Auswahl von Art und Menge richtet sich dabei nach den gewünschten Eigenschaften des Festelektrolyten sowie der Verträglichkeit mit den anderen Komponenten, insbesondere mit dem Bindemittel. Geeignet sind dabei insbesondere polare Monomere, die Ionen binden bzw. solvatisieren und somit zur Leitfähigkeit beitragen können. Als Beispiele bevorzugter Verbindungen seien solche mit Hydroyxlgruppen, Amidgruppen oder Polyethylenglykolstruktureinheiten genannt. Sehr geeignet sind auch Mono- und Polyacrylate und/oder -methacrylate von ein und mehrwertigen Alkoholen. Beispielsweise können eingesetzt werden (Meth)acrylsäurester von Alkanolen mit 1 bis 20 Kohlenstoffatomen, wie Methyl (meth)acrylat, Ethyl(meth)acrylat, Propyl(meth)acrylat, Isopropyl(meth)acrylat, Cyclohexyl(meth)acrylat; (Meth)acrylester mehrwertiger Alkohole mit 2 bis 20 Kohlenstoffatomen, z.B. 2-Hydroxy-ethyl(meth)acrylat, 2-Hydroxy-propyl(meth)acrylat, Ethylenglykoldi(meth)acrylat, Butandioldi(meth)acrylat, Polyethylenglykoldi(meth)acrylat oder 1,1,1-Trimethylol-propantri(meth)acrylat, des weiteren Polyethylenglykolmono(meth)acrylat-monomethylether und 2-Diethylaminoethylacrylat. Geeignet sind auch Epoxid- und Urethan(meth)acrylate, wie sie z.B. durch Umsetzung von Bisphenol-A-diglycidylether mit (Meth)acrylsäure oder durch Umsetzung von Mono- oder Diisocyanaten mit Hydroxyalkyl(meth)acrylaten und ggf. mit hydroxylgruppenhaltigen Polyestern oder Polyethern erhalten werden können. Ebenso eignen sich Derivate des Acrylamids und des Methacrylamids, z.B. Ether ihrer N-Methylolderivate mit ein und mehrwertigen Alkoholen, wie z.B. Ethylenglykol, Glycerin, 1,1,1-Trimethylolpropan, oligomeren oder polymeren Ethylenoxidderivaten.

Als Initiatoren für die Photopolymerisation sind unter anderen Benzoin oder Benzoinderivate, wie α-Methylbenzoin oder Benzoinether, Benzilderivate, wie Benzilketale, Acylarylphosphinoxide, Acylarylphosphinsäureester, Mehrkernchinone oder Benzophenone geeignet.

Die Vernetzung mit aktinischen Licht kann unmittelbar nach der Herstellung des Festelektrolyten erfolgen, also beispielsweise, indem die durch Extrusion hergestellte Festelektrolyt-Folie mit einer geeigneten Bestrahlungsvorrichtung unmittelbar hinter dem Extruder bestrahlt und vernetzt wird. Sie kann aber auch erst zu einem späteren Zeitpunkte, beispielsweise erst nach dem Einbau in eine elektrochrome Verglasung vernetzt werden.

Der erfindungsgemäße Festelektrolyt kann insbesondere für elektrochrome Verglasungen oder Spiegel und für Displays verwendet werden. Er kann aber selbstverständlich auch in anderen Systemen, in denen polymere Festelektrolyten eingesetzt werden, verwendet werden.

Seine Vorteile kommen insbesondere bei der Verwendung in Form von Folien zum Tragen. Bekanntlich werden Sicherheits-Verbundglasscheiben bspw. für Automobile durch Zuammenlaminieren zweier oder mehrerer Glasscheiben mit einer gut klebenden Kunststofffolie, z.B. aus Polyvinylbutyral hergestellt. Die Festelektrolyt-Folien können in elektrochrome Verglasungen prinzipiell auf gleiche Art und Weise eingearbeitet werden. Zeitaufwendige und teure Beschichtungsschritte können somit entfallen.

Die Kombination aus Füllstoff und einem polymeren Bindemittel erlaubt eine besonders gute Steuerung der mechanischen Eigenschaften des Festelektrolyten. Es können sehr einfach flexible, biegsame Folien mit hoher Ionenleitfähigkeit hergestellt werden, die dennoch nicht fließen oder zu weich sind.

Die folgenden Beispiele sollen die Erfindung veranschaulichen, ohne dass dadurch der Umfang der Erfindung eingeschränkt wird.

Die Messwerte wurde folgendermaßen erhalten:

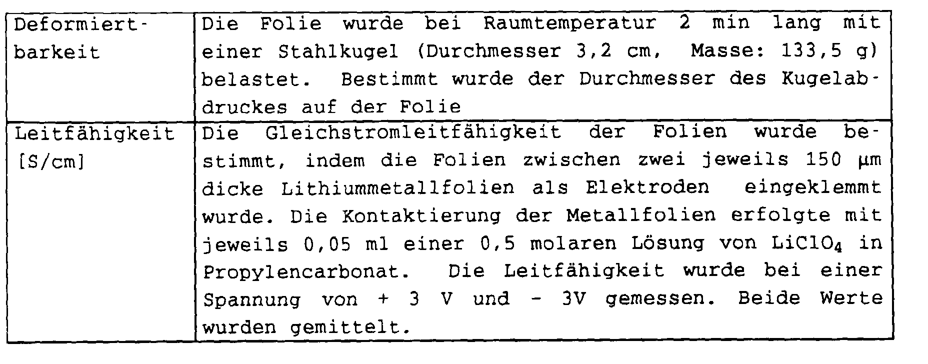

### Beispiel 1:

Es wurden folgende Komponenten eingesetzt:

| | | |
|---|---|---|
| Bindemittel | 61,0 g Polymethylmethycrylat | 30,5 Gew. % |
| Weichmacher | 56,4 g Propylencarbonat | 28,2 Gew.% |
| Leitsalz | 10,6 g Lithiumperchlorat | 5,3 Gew. % |
| Füllstoff | 72,0 g Aerosil VP R8200, hydrophobierte Oberfläche, Stampfdichte 150 g/l, Primärpartikelgröße: 21 nm | 36,0 Gew. % |

Das Leitsalz wurde im Weichmacher gelöst und die erhaltene Lösung wurde zusammen mit dem Bindemittel in einem Laborkneter (Fa. IKA) 1 h bei einer Manteltemperatur von 130°C geknetet, bis eine homogene Masse erhalten wurde. Dann wurde der Füllstoff, aufgeteilt in 3 Portionen zugesetzt und bei 130°C Manteltemperatur im Verlauf von 3 h eingeknetet. Erhalten wurde eine homogene Masse.

Die Masse wurde der Knetkammer entnommen und in einer heizbaren hydraulischen Presse bei 3000 kN Schließkraft zwischen zwei 125 µm dicken Polyesterfolien bei 130°C zu einer glasklaren, lithiumionenleitfähigen Folie mit einer Schichtdicke von 900 µm gepreßt. Die Folie hatte eine Glasübergangstemperatur < - 30°C und eine Lichtdurchlässigkeit bei 550 nm > 85%.

Die mechanischen und elektrischen Daten sind in Tabelle 1 aufgeführt.

### Beispiel 2:

Es wurde wie in Beispiel 1 vorgegangen, nur wurde der Bindemittelanteil verringert.

| | | |
|---|---|---|
| Bindemittel | 48,6 g Polymethylmethycrylat | 24,3 Gew. % |
| Weichmacher | 63,2 g Propylencarbonat | 31,6 Gew.% |
| Leitsalz | 10,6 g Lithiumperchlorat | 5,3 Gew. % |
| Füllstoff | 77,6 g Aerosil R8200 | 38,8 Gew. % |

Die mechanischen und elektrischen Daten sind in Tabelle 1 aufgeführt.

### Beispiel 3:

Es wurde wie in Beispiel 1 vorgegangen, nur wurde ein anderes Bindemittel eingesetzt.

| | | |
|---|---|---|
| Bindemittel | 61,0 g Ethylenvinylacetat-Copolymer (Anteil Vinylacetat: 36%) | 30,5 Gew.% |
| Weichmacher | 56,4 g Propylencarbonat | 28,2 Gew.% |
| Leitsalz | 10,6 g Lithiumperchlorat | 5,3 Gew.% |
| Füllstoff | 72,0 g Aerosil R8200 | 36,0 Gew. % |

Es wurde eine Folie mit einer Transparenz von 81% erhalten. Die mechanischen und elektrischen Daten sind in Tabelle 1 aufgeführt.

### Vergleichsbeispiel 1:

Es wurde wie in Beispiel 1 vorgegangen, nur wurde kein Füllstoff eingesetzt.

| | | |
|---|---|---|
| Bindemittel | 95,4 g Polymethylmethycrylat | 47,7 Gew. % |
| Weichmacher | 94,0 g Propylencarbonat | 47,0 Gew.% |
| Leitsalz | 10,6 g Lithiumperchlorat | 5,3 Gew. % |

Die mechanischen und elektrischen Daten sind in Tabelle 1 auf geführt.

### Vergleichsbeispiel 2:

Es wurde wie in Beispiel 1 vorgegangen, nur wurde kein Füllstoff eingesetzt.

| | | |
|---|---|---|
| Bindemittel | 125,0 g Polymethylmethycrylat | 62,5 Gew. % |
| Weichmacher | 64,4 g Propylencarbonat | 32,2 Gew.% |
| Leitsalz | 10,6 g Lithiumperchlorat | 5,3 Gew. % |

Die mechanischen und elektrischen Daten sind in Tabelle 1 aufgeführt.

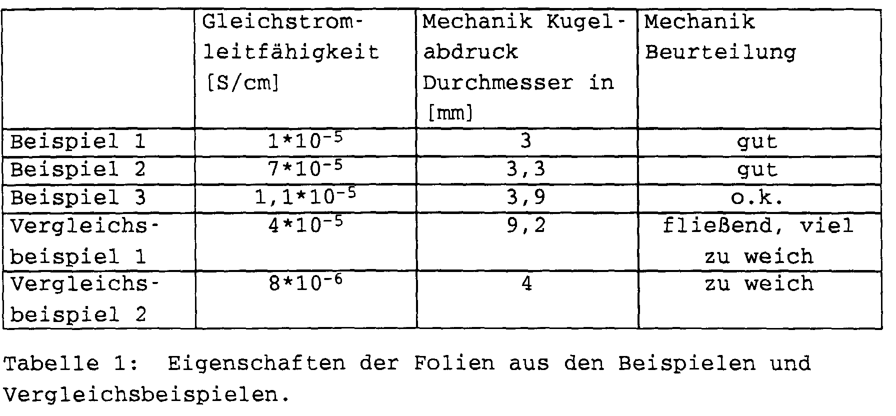

Die Beispiele und Vergleichsbeispiele zeigen, dass nur mit Füllstoffen Folien geeigneter Härte und Leitfähigkeit erhalten werden. Ohne Füllstoff werden nur weiche Folien erhalten. Wird der Bindemittelanteil bei Folien ohne Füllstoff heraufgesetzt und der Weichmacheranteil herabgesetzt , um eine weniger weiche Folie zu erhalten, nimmt die Leitfähigkeit deutlich ab.

## Patentansprüche

1. Optisch transparenter polymerer Festelektrolyt mit einer Lichtdurchlässigkeit > 80%, einer Leitfähigkeit von mehr als 10⁻⁶ S/cm bei 20°C und einer Glasübergangstemperatur T_{g} < -30°C, umfassend
• mindestens ein polymeres Bindemittel,
• mindestens einen Füllstoff mit einer Primärpartikelgröße von 1 nm bis 20 µm,
• mindestens ein Leitsalz,
• mindestens einen Ionen solvatisierenden Weichmacher, sowie
• optional weitere Zusatzstoffe und Hilfsmittel.

2. Festelektrolyt gemäß Anspruch 1, dadurch gekennzeichnet, dass es sich bei dem Füllstoff um einen anorganischen Füllstoff mit einer Primärpartikelgröße von 1 nm bis 300 nm handelt.

3. Folie bestehend aus einem Festelektrolyten gemäß einem der Ansprüche 1 bis 2.

4. Festelektrolyt-Folie gemäß Anspruch 3, dadurch gekennzeichnet, dass der Festelektrolyt vernetzt ist.

5. Verfahren zur Herstellung einer optisch transparenten polymeren Festelektrolyt-Folie mit einer Lichtdurchlässigkeit > 80%, einer Leitfähigkeit von mehr als 10⁻⁶ S/cm bei 20°C und einer Glasübergangstemperatur T_{g} < -30°C, dadurch gekennzeichnet, dass man
• mindestens ein polymeres Bindemittel
• mindestens einen Füllstoff mit einer Primärpartikelgröße von 1 nm bis 20 µm,
• mindestens ein Leitsalz,
• mindestens einen Ionen solvatisierenden Weichmacher, sowie
• optional weitere Zusatzstoffe und Hilfsmittel
intensiv miteinander vermischt, und durch thermoplastische Formgebung zu einer Folie ausformt.

6. Verfahren gemäß Anspruch 5, dadurch gekennzeichnet, dass die Folie photochemisch, thermisch oder durch Elektronenstrahlung vernetzt wird.

7. Verwendung des Festelektrolyten nach einem der Ansprüche 1 bis 4 zur Herstellung von elektrochromer Systemen oder Displays.
